# FASCICULE DE BREVET EUROPEEN

(11) **EP 0 868 280 B1**
(45) Date de publication et mention de la délivrance du brevet: **29.08.2001**
(21) Numéro de dépôt: 96942386.2
(22) Date de dépôt: 11.12.1996
(51) Int. Cl.: B29C 49/00

(54) **PREFORME POUR LA FABRICATION DE RECIPIENTS EN MATIERE THERMOPLASTIQUE AVEC CLOISON INTERIEURE**
VORFORM ZUM HERSTELLEN VON BEHÄLTERN AUS KUNSTSTOFF MIT INNENWÄNDEN
PREFORM FOR PRODUCING CONTAINERS WITH AN INNER PARTITION FROM A THERMOPLASTIC MATERIAL

(30) Priorité: 12.12.1995 FR 9514707
(43) Date de publication de la demande: 07.10.1998
(73) Titulaire: SIDEL Société anonyme, 76930 Octeville-sur-Mer (FR)
(72) Inventeur: LA BARRE, Paul, F-76310 Sainte-Adresse (FR)
(74) Mandataire: Gorrée, Jean-Michel
(86) Numéro de dépôt international: FR9601982
(87) Numéro de publication internationale: WO9721533

(56) Documents cités:
- EP-A- 0 531 536
- WO-A-90/05674

## Description

La présente invention concerne des perfectionnements apportés aux préformes en matière thermoplastique ayant un corps pourvu d'une cloison intérieure d'étendue longitudinale au moins partielle et destinée à la fabrication par moulage, notamment par soufflage ou par étirage-soufflage, d'un récipient dont le corps possède des zones qui sont situées de part et d'autre de la cloison intérieure et qui forment des empreintes creuses à convexité tournée vers l'intérieur et entretoisées par ladite cloison intérieure.

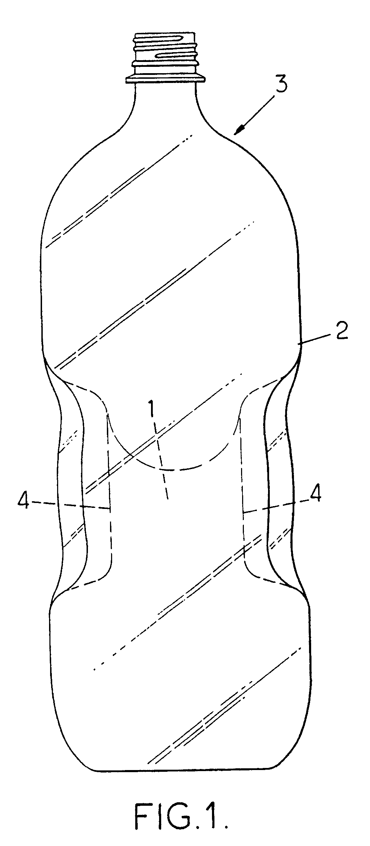

Il est connu de pourvoir d'une cloison intérieure des récipients, notamment des bouteilles, en matière thermoplastique telle que polyéthylènetéréphtalate PET, polyéthylènenaphtalate PEN, ou autre. Une telle cloison peut être totale, c'est-à-dire s'étendre sur toute la hauteur du récipient, pour diviser le volume intérieur du récipient en deux chambres renfermant deux liquides respectifs ne devant pas être mélangés avant d'être versés. Comme montré à la fig. 1 du dessin annexé, la cloison 1 peut aussi être partielle, c'est-à-dire ne s'étendre que sur une partie de la longueur du corps 2 du récipient 3, pour retenir (entretoisement) deux zones opposées du corps du récipient, par exemple pour maintenir deux empreintes 4 de préhension creusées dans le corps d'un récipient rempli d'un liquide sous pression, empreintes qui, si elles n'étaient pas renforcées, risqueraient d'être déformées sous l'action de la pression du fluide.

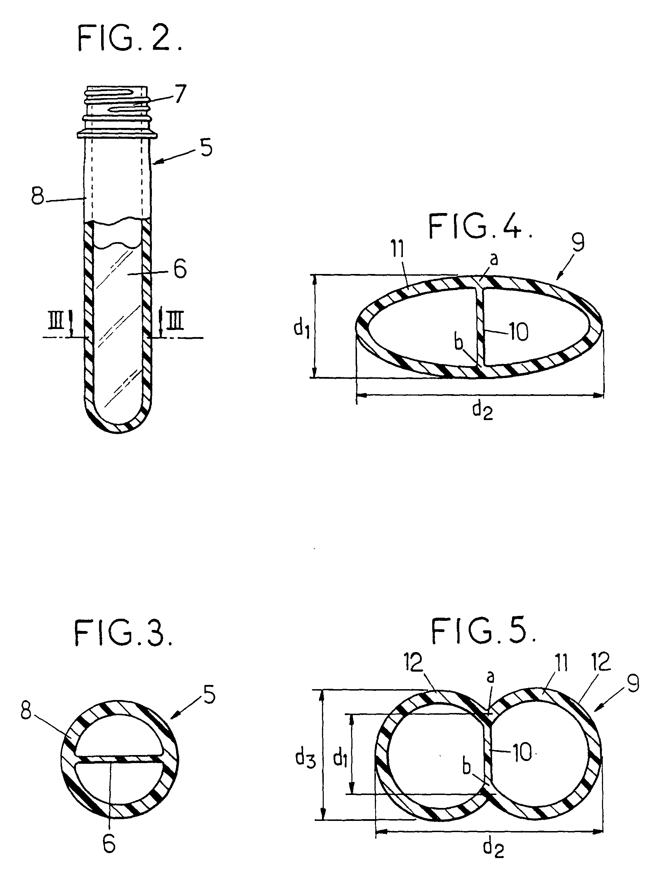

Il est connu de fabriquer de tels récipients à partir de préformes munies elles-mêmes d'une cloison intérieure, d'étendue longitudinale totale ou partielle selon le type du récipient final à obtenir. Une telle préforme 5 avec une cloison intérieure 6 d'étendue longitudinale partielle, destinée à la fabrication du récipient de la fig. 1, est représentée aux fig. 2 et 3 du dessin annexé, respectivement en vue de côté à la fig. 2 et, pour la fig. 3, en vue de dessus en section droite selon la ligne II-II de la fig. 2. Elle possède une structure générale analogue à celle d'une préforme sans cloison avec un col 7 et un corps à paroi épaisse 8 qui sont conformés classiquement. La cloison intérieure 6 possède une épaisseur sensiblement inférieure à celle de la paroi épaisse du corps.

Lorsque cette préforme connue est soumise, après chauffage, à un processus d'étirage ou d'étirage-soufflage pour l'obtention d'un récipient, la cloison intérieure subit un étirage au même titre que la paroi du corps : le taux d'étirage longitudinal de la cloison est identique à celui subi par le corps (par exemple, pour fixer les idées, typiquement 2,22 à 3,5 pour les qualités de PET utilisées industriellement actuellement). Par contre, lorsque le corps du récipient à obtenir doit présenter un rétrécissement transversal localisé -par exemple distance entre le fond des empreintes de préhension 4 du récipient de la fig. 1-, le taux d'étirage transversal de la cloison est localement très inférieur au taux d'étirage transversal (ou périmétrique) du corps du récipient : pour fixer les idées, le taux d'étirage transversal ou périmétrique du corps est en général au moins de l'ordre de 4, tandis que le taux d'étirage transversal subi par la cloison reste ici inférieur à 4.

I1 en résulte une différence désavantageuse des caractéristiques du matériau de la cloison et du matériau du corps du récipient : son matériau ayant subi un allongement transversal insuffisant, pour orienter complémentement les chaînes moléculaires, la cloison est sujette à déformation lorsque le récipient ultérieurement est soumis à des conditions d'utilisation sévères et elle n'est plus apte à assurer efficacement sa fonction d'entretoisement.

L'invention a précisément pour but de remédier à cet inconvénient et de proposer une solution technique qui autorise, au cours du processus de soufflage ou d'étirage-soufflage, un taux d'allongement transversal sensiblement identique pour le corps de la préforme et pour la cloison intérieure, de manière que les matériaux constitutifs de l'un et l'autre présentent des caractéristiques physiques et mécaniques sensiblement analogues et se comportent de façon homogène.

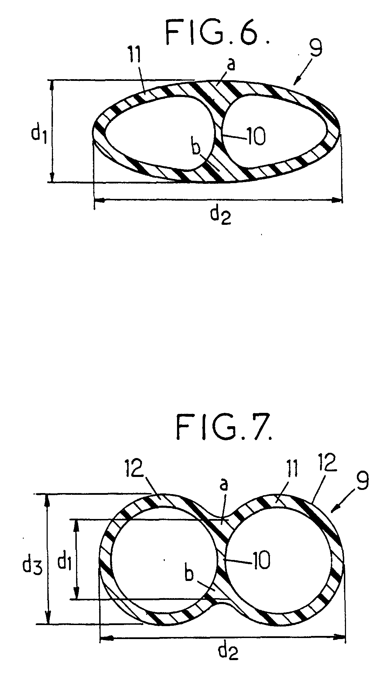

A ces fins et en se référant aux fig. 4 et 5 du dessin annexé illustrant respectivement, en vue de dessus en section droite et à une échelle sensiblement supérieure à celle de la fig. 3, deux modes de réalisation possibles d'une préforme selon l'invention qui sont donnés à titre d'exemples non limitatifs, une préforme 9 comme indiqué au préambule se caractérise essentiellement, étant agencée conformément à l'invention, en ce que son corps 11 présente, en section droite, un contour sensiblement cylindrique non circulaire avec deux zones particulières opposées a et b séparées l'une de l'autre par une distance minimale d₁ qui est inférieure aux distances séparant les autres zones dudit contour deux à deux opposées par rapport à la cloison, en ce que la cloison intérieure 10 s'étend entre lesdites deux zones particulières opposées a, b séparées d'une distance minimale d₁, et en ce que la valeur de la distance minimale d₁, sur une section droite donnée, est choisie, par rapport au périmètre du corps 11 de la préforme sur la même section, de façon telle que, lors du moulage, la cloison intérieure 10 subisse un taux d'étirage transversal qui soit sensiblement de même valeur que le taux d'étirage transversal (ou périmétrique) subi par le corps.

Du fait que, par ailleurs, le déroulement correct du processus de moulage par soufflage ou étirage-soufflage exclut, pratiquement, le recours à des préformes ayant un corps de forme géométriquement trop complexe, on aura avantageusement recours à une préforme 9 dont le corps 11 présente une dimension transversale maximale d₃, considérée parallèlement à la cloison intérieure 10, qui est sensiblement inférieure à sa dimension transversale d₂, considérée sensiblement perpendiculairement à la cloison intérieure 10, le rapport desdites dimensions transversales d₃ et d₂ étant tel que, lors du moulage, la cloison intérieure 10 subisse un taux d'étirage transversal qui soit sensiblement identique au taux d'étirage transversal subi par le corps.

Bien que d'autres agencements puissent en principe être envisagés, il est toutefois plus simple, et suffisant pour la plupart des applications pratiques, que la cloison 10 s'étende centralement dans un plan de symétrie du corps 11.

Il est souhaitable que l'emploi de préformes conformes à l'invention n'entraîne que des adaptations minimales des installations de fabrication des récipients pour l'obtention de récipients finaux de formes et de caractértistiques données (dimensions, épaisseur des parois, résistance thermique, etc.). Or, les modalités de mise en oeuvre du procédé de fabrication et lesdites caractéristiques des récipients finaux sont dépendantes des caractéristiques de la préforme de départ, et en particulier des dimensions géométriques de son corps (périmètre, épaisseur de paroi, etc.). Ainsi une modification minimale des conditions de fabrication et des installations de fabrications pour parvenir à un récipient donné implique que la préforme conforme à l'invention conserve les caractéristiques fondamentales des préformes antérieures pour l'exploitation desquelles les installations actuelles de fabrication sont conçues. I1 en est ainsi en particulier pour le périmètre du corps.

I1 est donc souhaitable en pratique que, quelle que soit la forme géométrique donnée au corps de la préforme, le périmètre de la section droite dudit corps 11, au moins dans la partie de celui-ci équipée d'une cloison intérieure, conserve une valeur sensiblement analogue à celle du périmètre du corps 8 cylindrique de révolution de la préforme traditionnelle, tandis que la cloison intérieure 10 est, conformément aux dispositions précédemment exposées de l'invention, moins large que la cloison 6 des préformes antérieures.

Ceci étant posé, le corps 11 de la préforme 9 agencée selon l'invention peut recevoir toute forme satisfaisant à cette condition de base. En particulier, le corps peut être cylindrique, avec notamment une section droite de forme ovale ou elliptique comme montré à la figure 4 ; les deux zones a et b précitées sont alors les parties de plus grand rayon de courbure et la cloison intérieure 10 s'étend selon le petit axe de l'ovale ou de l'ellipse, les distances d₁ et d₃ précitées étant alors identiques. Il est également possible de prévoir, comme montré à la figure 5, un corps à contour bilobé, la cloison 10 s'étendant entre les deux lobes 12 ; les zones a et b précitées sont ici les parties anguleuses de jonction des deux lobes.

Pour faciliter le processus d'étirage et renforcer le récipient, il est souhaitable que la cloison 10 se raccorde à la paroi de la préforme par des arrondis de relativement grand rayon comme montré aux figures 6 et 7 qui correspondent respectivement aux figures 4 et 5.

De la même manière que pour les préformes antérieures, la cloison intérieure peut avoir une étendue longitudinale totale ou partielle par rapport au corps de la préforme. Dans le cas d'une cloison partielle, on peut éventuellement prévoir que la forme particulière donnée au corps 11 de la préforme conformément à l'invention ne s'étend longitudinalement qu'en correspondance avec la cloison et que, pour le reste de son étendue longitudinale, le corps est cylindrique de révolution comme pour une préforme classique.

Grâce aux dispositions adoptées conformément à l'invention, on réalise une préforme perfectionnée qui est apte à conduire à un récipient final à cloison intérieure qui possède des caractéristiques homogènes et qui est apte à supporter, en cours d'utilisation, des contraintes thermiques et/ou mécaniques sans qu'il en résulte une déformation notable de l'ensemble du corps, y compris des zones de celui-ci qui étaient antérieurement sujettes à être déformées sous l'action de la pression d'un liquide de remplissage sous pression et qui sont maintenant retenues de façon correcte par la cloison correctement étirée et remplissant de façon convenable sa fonction d'entretoisement.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes.

## Revendications

1. Préforme (9) en matière thermoplastique ayant un corps (11) pourvu d'une cloison intérieure (10) d'étendue longitudinale au moins partielle et destinée à la fabrication par moulage, notamment par soufflage ou par étirage-soufflage, d'un récipient dont le corps possède des zones qui sont situées de part et d'autre de la cloison intérieure et qui forment des empreintes creuses à convexité tournée vers l'intérieur et entretoisées par ladite cloison intérieure,
caractérisée
en ce que le corps (11) de la préforme (9) présente, en section droite, un contour sensiblement cylindrique de forme non circulaire avec deux zones particulières opposées (a, b) séparées l'une de l'autre par une distance minimale (d₁) inférieure aux distances séparant les autres zones dudit contour deux à deux opposées par rapport à la cloison,
en ce que la cloison intérieure (10) s'étend entre lesdites deux zones particulières opposées (a, b) séparées d'une distance minimale (d₁),
et en ce que la valeur de la distance minimale (d₁), sur une section droite donnée, est choisie, par rapport au périmètre du corps (11) de la préforme sur la même section, de façon telle que, lors du moulage, la cloison intérieure (10) subisse un taux d'étirage transversal qui soit sensiblement de même valeur que le taux d'étirage transversal ou périmétrique subi par le corps (11).

2. Préforme selon la revendication 1, **caractérisée en ce que** le corps (11) présente une dimension transversale maximale (d₃) considérée parallèlement à la cloison intérieure qui est sensiblement inférieure à la dimension transversale (d₂) considérée sensiblement perpendiculairement à la cloison intérieure, le rapport desdites dimensions transversales (d₃, d₂) étant alors tel que, lors du moulage, la cloison intérieure (10) subisse un taux d'étirage transversal qui soit sensiblement identique au taux d'étirage transversal subi par le corps (11).

3. Préforme selon la revendication 1 ou 2, **caractérisée en ce que** la cloison intérieure (10) s'étend centralement dans un plan de symétrie du corps (11).

4. Préforme selon la revendication 3, **caractérisée en ce que** la section droite du corps (11) est approximativement ovale ou elliptique, avec la cloison intérieure (10) s'étendant sensiblement selon le petit axe de l'ovale ou de l'ellipse.

5. Préforme selon l'une quelconque des revendications 1 à 3, **caractérisée en ce que** le corps (11) possède un contour bilobé (12), la cloison intérieure (10) s'étendant entre les deux lobes (12).

6. Préforme selon l'une des revendications 1 à 5, **caractérisée en ce que** la cloison intérieure s'étend sur toute la longueur du corps (11).

7. Préforme selon l'une quelconque des revendications 1 à 5, **caractérisée en ce que** la cloison intérieure (10) ne s'étend que sur une partie de la longueur du corps (11) et en ce que, dans sa partie non pourvue de cloison intérieure, le corps (11) est cylindrique de révolution.

## Patentansprüche

1. Vorform (9) aus thermoplastischem Material, die einen Körper (11) mit einer Innenwand (10) von mindestens partieller Längserstreckung aufweist und zur Herstellung eines Behälters durch Formung, insbesondere durch Blasen oder durch Ziehen und Blasen bestimmt ist, und zwar eines Behälters, dessen Körper Bereiche aufweist, die zu beiden Seiten der Innenwand gelegen sind und nach innen konvexe Vertiefungen bilden, die durch die Innenwand verstrebt sind,
**dadurch gekennzeichnet**,
dass der Körper (11) der Vorform (9) im Querschnitt einen im wesentlichen zylindrischen, nicht kreisförmigen Umriss mit zwei besonderen einander entgegengesetzten Bereichen (a, b) aufweist, die in einem Mindestabstand (d₁) voneinander angeordnet sind, der kleiner als die Abstände ist, in denen die anderen, bezüglich der Innenwand paarweise einander entgegengesetzten Bereiche dieses Umrisses voneinander angeordnet sind,
dass die Innenwand (10) sich zwischen diesen besonderen entgegengesetzten Bereichen (a, b), die in einem Mindestabstand (d₁) voneinander angeordnet sind, erstreckt,
und dass der Wert des Mindestabstands (d₁) auf einem bestimmten Querschnitt bezüglich des Umfangs des Körpers (11) der Vorform auf demselben Querschnitt so gewählt ist, dass die Innenwand (10) bei der Formung einem Querziehgrad ausgesetzt wird, der im wesentlichen vom selben Wert wie der Quer- oder Umfangsziehgrad ist, dem der Körper (11) ausgesetzt wird.

2. Vorform nach Anspruch 1, **dadurch gekennzeichnet**, dass der Körper (11) eine parallel zur Innenwand gemessene maximale Querabmessung (d₃) besitzt, die beträchtlich kleiner als die im wesentlichen senkrecht zur Innenwand gemessene Querabmessung (d₂) ist, wobei das Verhältnis dieser Querabmessungen (d₃, d₂) so bemessen ist, dass die Innenwand (10) bei der Formung einem Querziehgrad ausgesetzt wird, der im wesentlichen gleich dem Querziehgrad ist, dem der Körper (11) ausgesetzt wird.

3. Vorform nach Anspruch 1 oder 2, **dadurch gekennzeichnet**, dass die Innenwand (10) sich mittig in einer Symmetrieebene des Körpers (11) erstreckt.

4. Vorform nach Anspruch 3, **dadurch gekennzeichnet**, dass der Querschnitt des Körpers (11) annähernd oval oder elliptisch ist, wobei sich die Innenwand (10) im wesentlichen längs der kleinen Achse des Ovals oder der Ellipse erstreckt.

5. Vorform nach einem der Ansprüche 1 bis 3, **dadurch gekennzeichnet**, dass der Körper (11) einen Umriss in Form eines Kurvenzweiecks (12) besitzt, wobei die Innenwand (10) sich zwischen den beiden Kurven (12) erstreckt.

6. Vorform nach einem der Ansprüche 1 bis 5, **dadurch gekennzeichnet**, dass die Innenwand sich über die ganze Länge des Körpers (11) erstreckt.

7. Vorform nach einem der Ansprüche 1 bis 5, **dadurch gekennzeichnet**, dass die Innenwand (10) sich nur über einen Teil der Länge des Körpers (11) erstreckt und dass der Körper (11) in seinem nicht mit einer Innenwand ausgestatteten Bereich rotationszylindrisch ist.

## Claims

1. Preform (9) made of a thermoplastic, having a body (11) provided with an at least partially longitudinally extended internal partition (10) and intended for the manufacture, by molding, especially by blow molding or by stretch-blow molding, of a container whose body has portions which are located on both sides of the internal partition and which are shaped as hollow recesses with inwardly-directed convex surfaces, said recesses being braced by said internal partition,
characterized
in that the body (11) of the preform (9) has, in cross section, a substantially cylindrical outline of noncircular shape with two specific opposed portions (a, b) separated from each other by a minimum distance (d₁) less than the distances separating the other portions of said outline which are pairwise opposed with respect to said partition,
in that the internal partition (10) extends between said two specific opposed portions (a, b) separated by a minimum distance (d₁),
and in that said minimum distance (d₁) is chosen, with respect to the perimeter of the body (11) of the preform on the same cross-section, so that, during molding, the internal partition (10) undergoes a transverse stretch ratio which has substantially the same value as the transverse or perimetric stretch ratio undergone by the body (11).

2. Preform according to claim 1, **characterized in that** the body (11) has a maximum transverse dimension (d₃), regarded as being parallel to the internal partition, which is substantially less than the maximum transverse dimension (d₂), regarded as being approximately perpendicular to the internal partition, the ratio of said transverse dimensions (d₃, d₂) being such that, during molding, the internal partition (10) undergoes a transverse stretch ratio which is substantially identical to the transverse stretch ratio undergone by the body (11) .

3. Preform according to claim 1 or 2, **characterized in that** the internal partition (10) extends centrally in a plane of symmetry of the body (11).

4. Preform according to claim 3, **characterized in that** the cross section of the body (11) is approximately oval or elliptical, with the internal partition (10) extending substantially along the minor axis of the oval or of the ellipse.

5. Preform according to any one of claims 1 to 3, **characterized in that** the body (11) has a bilobate outline (12), the internal partition (10) extending between the two lobes (12).

6. Preform according to any one of Claims 1 to 5, **characterized in that** the internal partition extends over the entire length of the body (11).

7. Preform according to any one of Claims 1 to 5, **characterized in that** the internal partition (10) extends only over part of the length of the body (11) and in that, in its part not provided with an internal partition, the body (11) is a cylinder of revolution.
